# FASCICULE DE BREVET EUROPEEN

(11) **EP 4 511 277 B1**
(45) Date de publication et mention de la délivrance du brevet: **11.03.2026**
(21) Numéro de dépôt: 23716639.2
(22) Date de dépôt: 20.03.2023
(51) Int. Cl.: B62D 25/08

(54) **VÉHICULE AUTOMOBILE COMPRENANT UN LONGERON AVEC UNE PIÈCE DE RENFORT**
KRAFTFAHRZEUG MIT EINEM SEITENGLIED MIT EINEM VERSTÄRKUNGSTEIL
MOTOR VEHICLE COMPRISING A SIDE MEMBER WITH A REINFORCING PART

(30) Priorité: 21.04.2022 FR 2203700
(43) Date de publication de la demande: 26.02.2025
(73) Titulaire: Stellantis Auto SAS, 78300 Poissy (FR)
(72) Inventeur: TROPEE, Nicolas, 90000 BELFORT (FR); MARCILLE, Sylvain, 91070 BONDOUFLE (FR)
(74) Mandataire: BCIP
(86) Numéro de dépôt international: PCT/FR2023/050386
(87) Numéro de publication internationale: WO 2023/203288

(56) Documents cités:
- DE-A1- 102004 012 804
- DE-A1- 102006 036 455
- DE-A1- 19 812 679
- DE-A1- 4 020 363

## Description

La présente invention revendique la priorité de la demande française 2203700 déposée le 21 avril 2022 La présente invention concerne les véhicules automobiles comprenant une structure avec au moins un longeron.

Un véhicule automobile comprend une structure avec au moins un longeron latéral. Le longeron latéral est une pièce de support de la structure du véhicule. Dans la partie arrière du véhicule, le longeron est généralement agencé en avant du pare-chocs arrière. Le longeron peut soutenir, entre autres, un dispositif de suspension arrière.

Dans le cadre d'un véhicule électrique ou d'un véhicule hybride électrique, un bac de batterie est généralement monté en-dessous de l'habitacle. L'intégration des batteries et des équipements spécifiques induit une surcharge d'environ 400 kg par rapport à un véhicule thermique. La rigidité du longeron est alors importante pour assurer une bonne efficacité des ressorts de suspension du véhicule.

La réalisation de la structure du véhicule doit en outre satisfaire de nombreuses prestations, notamment des tests de chocs.

Un test mesure, par exemple, la résistance d'un véhicule à un choc arrière à grande vitesse. Dans ce test, une barrière mobile est lancée contre le pare-chocs arrière d'un véhicule automobile à une vitesse de 80 km/h. Le véhicule est positionné de manière à ce qu'au moins 70% de la largeur totale du pare-chocs soit percutée. La déformation de l'habitacle engendrant des risques importants de blessures, le test vise particulièrement à évaluer l'amplitude de cette déformation.

Lors d'un choc arrière à grande vitesse, il est important que la déformation de la structure arrière ne vienne pas endommager un bac de batterie.

Une partie des efforts résultant d'un choc arrière transitant par la poutre de pare-chocs puis par les longeron latéraux, on comprend que dans une situation de choc arrière à grande vitesse la rigidité du longeron est importante.

On cherche donc des solutions pour améliorer le comportement d'un véhicule au niveau des suspensions et en cas de choc arrière.

On connait le document FR 2997369 qui décrit un véhicule automobile avec une structure comprenant un longeron avant. Le longeron est en forme de corps creux et comprend un système passif de renfort configuré pour renforcer la résistance à la compression suivant une direction longitudinale du longeron. Le système passif de renfort comprend au moins un élément rigide en forme de cylindre, fixé à l'intérieur de l'élément de longeron sensiblement transversalement à la direction longitudinale du longeron.

Cette solution est intéressante mais a plusieurs désavantages. Le système passif de renfort comprend des tubes complexes à fabriquer et à monter au travers du corps creux du longeron. Le longeron avec son système passif n'améliore pas le soutient d'un dispositif de suspension du véhicule. Par ailleurs, le longeron présente deux tronçons inclinés l'un par rapport à l'autre, dont un tronçon horizontal et un tronçon incliné vers le bas. En cas de choc arrière, le tronçon incliné est davantage rabattu vers le bas et le tronçon horizontal se relève. En complément, la structure arrière pénètre l'habitacle ; ce qui pénalise la sécurité des passagers. Un autre exemple est connu grâce au document DE 40 20 363 A1.

L'invention a pour objectif de répondre à au moins un des problèmes ou inconvénients rencontrés dans l'art antérieur. En particulier, l'invention a pour objectif d'améliorer la rigidité d'une structure de véhicule automobile. L'invention a également pour objectif d'optimiser la sécurité passager et la simplicité d'assemblage d'une structure de véhicule automobile.

A cet effet et selon un premier aspect, l'invention a pour objet un véhicule automobile comprenant une structure avec au moins un longeron ; le longeron comprend un corps allongé avec un premier tronçon horizontal et un deuxième tronçon incliné par rapport au premier tronçon, le corps présentant une face latérale verticale et une face inférieure ; la structure comprenant en outre une pièce de renfort du longeron, ladite pièce de renfort comprenant une première partie de renfort de fixation de système de suspension contre la face inférieure au niveau du premier tronçon.

Le véhicule est remarquable en ce que la pièce de renfort comprend en outre une deuxième partie qui s'étend le long du deuxième tronçon et qui est fixée audit deuxième tronçon.

Comme on l'aura compris à la lecture de la définition qui vient d'en être donnée, grâce à la deuxième partie reliée au deuxième tronçon, la pièce de renfort augmente la rigidité de la structure. Les fixations sur le premier et le deuxième tronçon étendent les zones d'ancrage, ce qui contribue également à améliorer la rigidité générale de la structure. Cet aspect limite également le pliage du longeron en cas de choc, si bien de que la sécurité passive augmente.

Ainsi, l'invention adapte un longeron en allongeant la pièce de renfort servant à la fixation de la suspension et offre un gain en sécurité. Par ailleurs, sa fixation utilise des moyens déjà requis. En cela, l'invention permet une optimisation sur la fixation et la sécurité. En complément, l'invention optimise la sécurité et le nombre de pièces d'une structure de véhicule automobile.

Dans des modes de réalisation, la deuxième partie s'étend également contre la face latérale le long du premier tronçon du corps.

Préférentiellement, la deuxième partie comprend une largeur dans la direction verticale de la face latérale, plus grande au niveau du deuxième tronçon du corps qu'au niveau du premier tronçon du corps du longeron.

Dans des modes de réalisation, la première partie est formée par une tôle présentant une première épaisseur, et la deuxième partie de la pièce de renfort comprend une tôle avec une deuxième épaisseur supérieure à la première épaisseur.

De préférence, la première partie est formée par une tôle présentant une première nuance, et la deuxième partie comprend une tôle métallique avec une deuxième nuance plus rigide que la première nuance.

Préférentiellement, la deuxième partie recouvre la face inférieure et/ou la face latérale dans le deuxième tronçon du corps de la pièce de renfort.

Préférentiellement, la première partie comprend un orifice de fixation dans lequel est agencé un moyen de fixation d'un bras de suspension d'un système de suspension.

Dans des modes de réalisation, la face latérale du corps du longeron est une première face latérale, et le corps comprend en outre une deuxième face latérale, la face inférieure reliant la première face latérale et la deuxième face latérale ; et le long du premier tronçon la première partie s'étend contre ladite deuxième face latérale.

Préférentiellement, la pièce de renfort comprend un premier composant formant la première partie, et un deuxième composant formant la deuxième partie de la pièce de renfort, contre la face inférieure du corps au niveau du premier tronçon et soudé au premier composant le long du premier tronçon.

Préférentiellement, le premier composant comprend au moins une patte de fixation par soudage au deuxième composant; la patte de fixation s'étendant perpendiculairement à la face latérale du corps du longeron.

Dans des modes de réalisation, le véhicule comprenant en outre une poutre de pare-chocs arrière, le véhicule est remarquable en ce que le longeron est un longeron arrière inférieur, et en ce que le premier tronçon du corps est lié à la poutre de pare-chocs arrière.

Préférentiellement, la face inférieure comprend une surface coudée à la jonction entre le premier tronçon et le deuxième tronçon ; la deuxième partie recouvrant ladite surface coudée.

Préférentiellement, le long du deuxième tronçon la deuxième partie comprend un voile vertical contre la face verticale et un voile incliné contre la face inférieure ; le voile vertical étant longitudinalement plus long que le voile incliné.

Préférentiellement, le véhicule comprend un bras de suspension fixé au longeron contre la première partie.

Préférentiellement, le premier tronçon est au-dessus du deuxième tronçon.

Préférentiellement, le longeron est un longeron arrière ou un longeron avant, la structure comprenant un longeron central relié au deuxième tronçon.

Préférentiellement, le long du deuxième tronçon la deuxième partie présente une augmentation d'épaisseur verticale vers l'opposé de la première partie.

Préférentiellement, le long du premier tronçon la pièce de renfort présente un profil en « U » et/ou un creux longitudinal dans lequel est agencé le longeron.

Préférentiellement, le deuxième tronçon incliné est incliné vers le bas depuis le premier tronçon.

Selon un deuxième aspect, l'invention a pour objet un longeron arrière inférieur pour un véhicule automobile selon le premier aspect, comprend un corps allongé avec un premier tronçon horizontal et un deuxième tronçon incliné par rapport au premier tronçon, le corps présentant une face latérale verticale et une face inférieure. Le longeron comprend en outre une pièce de renfort, ladite pièce de renfort comprenant une première partie de renfort de fixation de suspension contre la face inférieure au niveau du premier tronçon.

Le longeron est remarquable en ce que la pièce de renfort comprend en outre une deuxième partie qui s'étend le long du deuxième tronçon et qui est fixée audit deuxième tronçon.

L'invention sera bien comprise et d'autres aspects et avantages apparaîtront clairement à la lecture de la description qui suit, donnée à titre d'exemple en référence aux planches de dessins annexées sur lesquelles :

[Fig. 1] la figure 1 est une vue du dessous d'un véhicule automobile selon un mode de réalisation de l'invention ;

[Fig. 2] la figure 2 est une vue de côté d'un longeron isolé du véhicule, selon un mode de réalisation de l'invention ;

[Fig. 3] la figure 3 est une vue en perspective du dessous d'un longeron isolé du véhicule selon un mode de réalisation de l'invention.

Dans la suite de la description, le terme « comprendre » est synonyme de « inclure » et n'est pas limitatif en ce qu'il autorise la présence d'autres éléments dans le véhicule ou le longeron auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

Dans la présente description le terme « perpendiculaire » ne doit pas être entendu au sens strict du terme. Perpendiculaire signifie une inclinaison à 90° +/-10° ; préférentiellement +/- 5° ; plus préférentiellement +/- 2°. De même, le terme « horizontal » ne doit pas être entendu au sens strict du terme. Une tolérance de 10°, préférentiellement 5°, est appliquée dans le contexte de l'invention. Le terme « parallèle » ne doit pas être entendu au sens strict du terme. La notion de parallélisme couvre des inclinaisons inférieures ou égales à 10° ; préférentiellement à 5°.

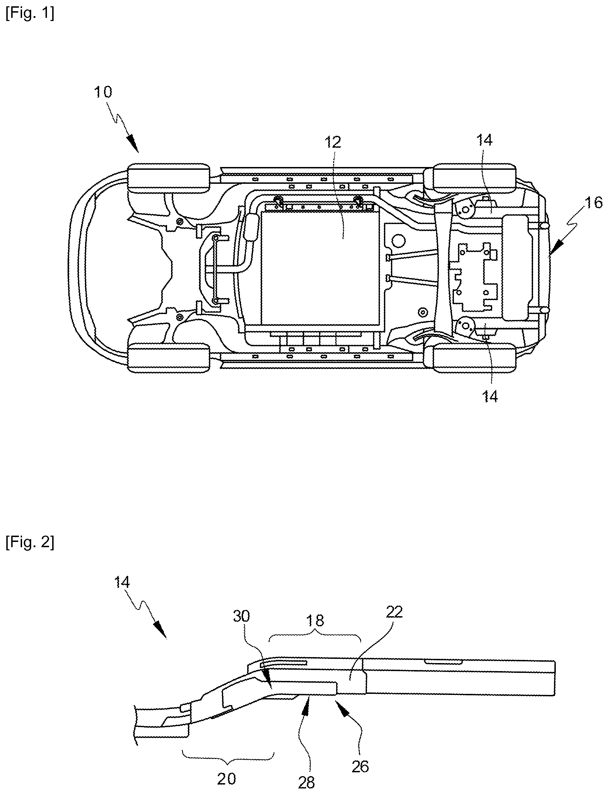

Un véhicule automobile 10 montré en vue du dessous à la figure 1 comprend une structure destinée à supporter des organes et des pièces du véhicule. Par exemple, comme montré à la figure 1, dans le cas d'un véhicule électrique ou hybride électrique, la structure supporte un bloc de batterie 12. La structure comprend au moins un longeron 14 agencé selon une direction longitudinale du véhicule.

Le longeron est destiné à supporter une charge et permet également une transmission des efforts en cas de choc longitudinal depuis l'arrière du véhicule 10. Dans l'exemple de la figure 1, le véhicule comprend deux longerons 14 qui sont des longerons arrière inférieurs, mais le véhicule automobile peut comprendre un ou plusieurs longeron agencé en partie avant du véhicule. Le longeron 14 est lié à un dispositif de pare-chocs 16 arrière, et notamment à une poutre de pare-chocs, non montrée.

Le longeron 14 montré isolé à la figure 2 est un corps creux qui comprend un corps allongé avec un premier tronçon 18 horizontal et un deuxième tronçon 20 incliné par rapport au premier tronçon 20. Les tronçons sont des tronçons longitudinaux. Le longeron 14 présente ainsi une forme coudée. Les premiers et deuxièmes tronçons peuvent s'étendre dans la direction longitudinale du véhicule en formant un coude. Par exemple, le deuxième tronçon 20 s'étend verticalement vers le bas depuis le premier tronçon 18, c'est-à-dire que le deuxième tronçon 20 prolonge longitudinalement le premier tronçon 18 vers le bas. Par exemple, le premier tronçon 18 est agencé en arrière du deuxième tronçon 20 dans le véhicule 10.

Le corps du longeron 14 peut être formé par des profilés ou des pièces de tôle. Le longeron 14 est avantageusement formé d'une pluralité de tôles embouties et soudées les unes aux autres. Par exemple, le longeron peut comprendre un corps tubulaire avec une section sensiblement rectangulaire, ou en U. Le longeron 14 présente au moins une face latérale 22 verticale et une face inférieure 24. On comprend que le longeron peut présenter d'autres faces en fonction de son profil. Préférentiellement, la face latérale 22 et la face inférieure 24 sont transversalement adjacentes ; et/ou s'étendent longitudinalement le long l'une de l'autre. Elles sont généralement perpendiculaires l'une à l'autre.

La face latérale du corps du longeron peut être une première face latérale, par exemple une face latérale externe ; et le corps peut comprendre en outre une deuxième face latérale, par exemple une face latérale interne. Le longeron montre un profil en « U » ou rectangulaire dans lequel les deux faces latérales 22 s'étendent depuis la face inférieure 24. Les faces latérales peuvent être des faces opposées selon la direction transversale du véhicule. La première face latérale est par exemple parallèle à la première face latérale. La face inférieure du corps relie la première face latérale et la deuxième face latérale. Le long du premier tronçon, la première partie de la pièce de renfort s'étend contre la première face latérale et la deuxième face latérale du longeron.

Le longeron 14 peut être une pièce métallique, par exemple en acier d'une épaisseur entre 1 et 2,5 mm. Alternativement, le longeron est en aluminium. Suivant une autre variante, le longeron 14 est en matériau composite à matrice organique, et à fibres de verre ou de carbone. D'autres matériaux sont envisagés.

La structure du véhicule 10 comprend en outre une pièce de renfort 26 du longeron 14 fixée sur des faces du longeron. La pièce de renfort 26 comprend une première partie 28 dite de renfort de fixation de système de suspension, contre la face inférieure 24 au niveau du premier tronçon 18 du longeron. La première partie 28 est une première partie longitudinale. Selon une option, la première partie 28 s'étend également sur la face latérale 22.

La pièce de renfort 26 comprend en outre une deuxième partie 30 qui s'étend le long du deuxième tronçon 20 du longeron 14 et qui est fixée audit deuxième tronçon 20. La deuxième partie 30 est une deuxième partie longitudinale. Par exemple, la deuxième partie 30 peut s'étendre le long de la face inférieure 24 et/ou de la face latérale 22 dans le deuxième tronçon 20 du corps de la pièce de renfort. La deuxième partie 30 recouvre la face inférieure 24 et/ou la face latérale 22. Ainsi, la surface de transmission d'efforts de la pièce de renfort est étendue ; ce qui améliore le comportement en cas de choc arrière.

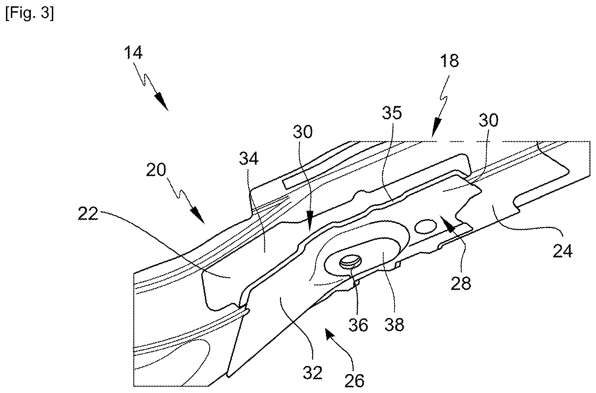

Dans l'exemple des figures 2 et 3, les première et deuxième parties (28, 30) de la pièce de renfort 26 s'étendent chacune contre la face inférieure et la face latérale.

La pièce de renfort 26 est une pièce métallique qui peut être formée par un seul composant, ou par plusieurs composants fixés, par exemple soudés, entre eux. Par exemple, la pièce de renfort 26 comprend une ou plusieurs pièces de tôle ou profilés. La pièce de renfort peut présenter un profil particulier, par exemple en « U », ou en « L ». La pièce de renfort peut aussi comprendre un creux longitudinal dans lequel est agencé le longeron.

Comme montré à la figure 3, la pièce de renfort peut comprendre un premier composant 32 et un deuxième composant 34. Le premier composant 32 recouvre la face inférieure le long du premier tronçon et du deuxième tronçon. Le premier composant 32 recouvre également une des faces latérales, par exemple la face latérale externe, non montrée, du longeron. Le deuxième composant 34 recouvre la face latérale interne le long du premier tronçon et du deuxième tronçon. Ainsi, dans le deuxième tronçon le longeron est maintenu par le premier composant 32 et le deuxième composant 34 ; ce qui améliore la transmission d'efforts de la pièce de renfort du premier tronçon au deuxième tronçon. Le deuxième composant 34 peut être soudé au premier composant 32 le long du premier tronçon 18 et du deuxième tronçon.

Le premier composant 32 peut comprendre au moins une patte de fixation 35 par soudage au deuxième composant 34. La patte de fixation 35 peut alors s'étendre avec un angle par rapport à la face latérale du corps du longeron 14, par exemple la patte de fixation 35 peut s'étendre perpendiculairement à la face latérale du corps du longeron.

Par exemple, les tôles formant les première et deuxième parties peuvent avoir une épaisseur de 1 à 4 mm. Les première et deuxième parties (28, 30) de la pièce de renfort 26 peuvent être formées par des tôles ayant la même épaisseur. Cette ou ces épaisseurs sont avantageusement supérieure à l'épaisseur de la tôle formant le longeron 14, et notamment sa face inférieure.

Selon des variantes non montrées, le premier composant 32 est formée par une tôle présentant une première épaisseur, et le deuxième composant 34 de la pièce de renfort comprend une tôle avec une deuxième épaisseur supérieure à la première épaisseur.

Selon des variantes non montrées, le long du deuxième tronçon, la deuxième partie présente une augmentation d'épaisseur verticale vers l'opposé de la première partie.

Les première et deuxième parties (28, 30) peuvent être formées par des tôles montrant des nuances métallique identiques, ou des nuances différentes. Avantageusement, la deuxième partie de la pièce de renfort est formée dans un métal d'une nuance offrant une limite élastique plus faible que la première partie de la pièce de renfort.

La deuxième partie 30 peut comprendre une largeur dans la direction verticale de la face latérale 22, notamment une hauteur, plus grande au niveau du deuxième tronçon 20 du corps qu'au niveau du premier tronçon 18 du corps du longeron. C'est-à-dire que si la deuxième partie est formée, par exemple, par une plaque ou une paroi métallique allongée selon la direction longitudinale du longeron, fixée à la face latérale, la largeur de la deuxième partie sera plus grande dans le deuxième tronçon que dans le premier tronçon du longeron. Par exemple, la deuxième partie présente une forme évasée fixée à la face latérale du longeron, qui s'élargit vers le deuxième tronçon du longeron.

Comme montré à la figure 3, la première partie 28 de la pièce de renfort peut comprendre un orifice de fixation 36 dans lequel est agencé un moyen de fixation, non montré, d'un bras de suspension d'un système de suspension. L'orifice de fixation 36 est alors avantageusement fixé en regard d'un orifice formé dans le longeron 14 dans lequel est agencé le moyen de fixation, comme par exemple une tige ou une vis de fixation.

La première partie 28 peut alors comprendre des moyens de rigidification agencés autour de l'orifice de fixation 36. Les moyens de rigidification peuvent comprendre une ou plusieurs encoches, lumières, ondulations, nervures, bossage, ou rebord, ou une combinaison de ceux-ci. Dans l'exemple de la figure 3, les moyens de rigidification comprennent un rebord 38. Les moyens de rigidification sont agencés au niveau du premier tronçon.

## Revendications

1. Véhicule automobile (10) comprenant une structure avec au moins un longeron (14) ; le longeron comprend un corps allongé avec un premier tronçon (18) horizontal et un deuxième tronçon (20) incliné par rapport au premier tronçon, le corps présentant une face latérale (22) verticale et une face inférieure (24) ; la structure comprenant en outre une pièce de renfort (26) du longeron, ladite pièce de renfort comprenant une première partie (28) de renfort de fixation de système de suspension contre la face inférieure (24) au niveau du premier tronçon (18) ; le véhicule est **caractérisé en ce que** la pièce de renfort comprend en outre une deuxième partie (30) qui s'étend le long du deuxième tronçon (20) et qui est fixée audit deuxième tronçon (20).

2. Véhicule automobile selon la revendication 1, **caractérisé en ce que** la deuxième partie (30) s'étend également contre la face latérale (22) le long du premier tronçon (18) du corps.

3. Véhicule automobile selon la revendication 2, **caractérisé en ce que** la deuxième partie (30) comprend une largeur dans la direction verticale de la face latérale (22), plus grande au niveau du deuxième tronçon (20) du corps qu'au niveau du premier tronçon (18) du corps du longeron.

4. Véhicule automobile selon l'une quelconque des revendications 1 à 3, **caractérisé en ce que** la première partie est formée par une tôle présentant une première épaisseur, et la deuxième partie de la pièce de renfort comprend une tôle avec une deuxième épaisseur supérieure à la première épaisseur.

5. Véhicule automobile selon l'une quelconque des revendications 1 à 4, **caractérisé en ce que** la deuxième partie recouvre la face inférieure et/ou la face latérale dans le deuxième tronçon du corps de la pièce de renfort.

6. Véhicule automobile selon l'une quelconque des revendications 1 à 5, **caractérisé en ce que** la première partie comprend un orifice de fixation dans lequel est agencé un moyen de fixation d'un bras de suspension d'un système de suspension.

7. Véhicule automobile selon l'une quelconque des revendications 1 à 6, **caractérisé en ce que** la face latérale (22) du corps du longeron (14) est une première face latérale, et **en ce que** le corps comprend en outre une deuxième face latérale, la face inférieure reliant la première face latérale et la deuxième face latérale ; et **en ce que** le long du premier tronçon la première partie s'étend contre ladite deuxième face latérale.

8. Véhicule automobile selon l'une quelconque des revendications 1 à 7, **caractérisé en ce que** la pièce de renfort comprend un premier composant formant la première partie, et un deuxième composant formant la deuxième partie de la pièce de renfort, contre la face inférieure (24) du corps au niveau du premier tronçon et soudé au premier composant le long du premier tronçon.

9. Véhicule automobile selon la revendication 8, **caractérisé en ce que** le premier composant comprend au moins une patte de fixation par soudage au deuxième composant; la patte de fixation s'étendant perpendiculairement à la face latérale du corps du longeron.

10. Véhicule automobile selon l'une quelconque des revendications précédentes 1 à 9, le véhicule comprenant en outre une poutre de pare-chocs arrière, **caractérisé en ce que** le longeron est un longeron arrière inférieur, et **en ce que** le premier tronçon du corps est lié à la poutre de pare-chocs arrière.

## Patentansprüche

1. Kraftfahrzeug (10), das eine Struktur mit mindestens einem Längsträger (14) aufweist; wobei der Längsträger einen länglichen Körper mit einem ersten horizontalen Abschnitt (18) und einem zweiten Abschnitt (20) aufweist, der in Bezug auf den ersten Abschnitt geneigt ist, wobei der Körper eine vertikale Seitenfläche (22) und eine untere Fläche (24) aufweist; wobei die Struktur ferner ein Verstärkungsteil (26) des Längsträgers aufweist, wobei das Verstärkungsteil einen ersten Verstärkungsteil (28) zur Befestigung des Aufhängungssystems an der unteren Fläche (24) aufweist Erster Abschnitt (18); das Fahrzeug ist **dadurch gekennzeichnet, dass** das Verstärkungsteil ferner einen zweiten Abschnitt (30) umfasst, der sich entlang des zweiten Abschnitts (20) erstreckt und an dem zweiten Abschnitt (20) befestigt ist.

2. Kraftfahrzeug nach Anspruch 1, **dadurch gekennzeichnet, dass** sich der zweite Teil (30) auch gegen die Seitenfläche (22) entlang des ersten Abschnitts (18) des Körpers erstreckt.

3. Kraftfahrzeug nach Anspruch 2, **dadurch gekennzeichnet, dass** der zweite Abschnitt (30) eine Breite in vertikaler Richtung der Seitenfläche (22) aufweist, die am zweiten Körperabschnitt (20) größer ist als am ersten Körperabschnitt (18) des Längsträgers.

4. Kraftfahrzeug nach einem der Ansprüche 1 bis 3, **dadurch gekennzeichnet, dass** der erste Teil durch ein Blech mit einer ersten Dicke gebildet ist und der zweite Teil des Verstärkungsteils ein Blech mit einer zweiten Dicke aufweist, die größer als die erste Dicke ist.

5. Kraftfahrzeug nach einem der Ansprüche 1 bis 4, **dadurch gekennzeichnet, dass** der zweite Teil die Unterseite und/oder die Seitenfläche im zweiten Abschnitt des Körpers des Verstärkungsteils bedeckt.

6. Kraftfahrzeug nach einem der Ansprüche 1 bis 5, **dadurch gekennzeichnet, dass** der erste Teil eine Befestigungsöffnung aufweist, in der ein Mittel zur Befestigung eines Aufhängungsarms eines Aufhängungssystems angeordnet ist.

7. Kraftfahrzeug nach einem der Ansprüche 1 bis 6, **dadurch gekennzeichnet, dass** die Seitenfläche (22) des Längsträgerkörpers (14) eine erste Seitenfläche ist, und dass der Körper ferner eine zweite Seitenfläche aufweist, wobei die untere Fläche die erste Seitenfläche und die zweite Seitenfläche verbindet, und dass sich der erste Teil entlang des ersten Abschnitts gegen die zweite Seitenfläche erstreckt.

8. Kraftfahrzeug nach einem der Ansprüche 1 bis 7, **dadurch gekennzeichnet, dass** das Verstärkungsteil eine erste Komponente, die den ersten Teil bildet, und eine zweite Komponente, die den zweiten Teil des Verstärkungsteils bildet, an der Unterseite (24) des Körpers an dem ersten Abschnitt anliegt und entlang des ersten Abschnitts mit der ersten Komponente verschweißt ist.

9. Kraftfahrzeug nach Anspruch 8, **dadurch gekennzeichnet, dass** das erste Bauteil wenigstens eine Befestigungslasche durch Schweißen mit dem zweiten Bauteil aufweist, wobei die Befestigungslasche sich senkrecht zur Seitenfläche des Längsträgerkörpers erstreckt.

10. Kraftfahrzeug nach einem der vorhergehenden Ansprüche 1 bis 9, wobei das Fahrzeug ferner einen hinteren Stoßfängerbalken aufweist, **dadurch gekennzeichnet, dass** der Holm ein unterer hinterer Holm ist und dass der erste Abschnitt des Körpers mit dem hinteren Stoßfängerbalken verbunden ist.

## Claims

1. Motor vehicle (10) comprising a frame with at least one spar (14); the spar comprises an elongated body with a first horizontal section (18) and a second section (20) inclined by report to the first section, the body having a vertical lateral face (22) and a lower face (24); the frame further comprising a reinforcing component (26) of the spar, said reinforcing component comprising a first part (28) for reinforcing the suspension system against the lower face (24) at the level of the first section (18); the frame further comprising a second part (30) which extends along the second section (20) and which is fixed to said second section (20).

2. Motor vehicle according to Claim 1, **characterised in that** the second part (30) also extends against the lateral face (22) along the first section (18) of the body.

3. Motor vehicle according to Claim 2, **characterised in that** the second part (30) comprises a width in the vertical management of the lateral face (22), greater at the level of the second section (20) of the body than at the level of the first section (18) of the body of the spar.

4. Motor vehicle according to any one of Claims 1 to 3, wherein the first part is made of a sheet having a first thickness, and the second part of the reinforcing component comprises a sheet with a second thickness greater than the first thickness.

5. Motor vehicle according to any one of Claims 1 to 4, **characterised in that** the second part covers the lower face and/or the lateral face in the second section of the body of the reinforcing component.

6. Motor vehicle according to any one of Claims 1 to 5, **characterised in that** the first part comprises a fixing orifice in which is arranged a means for fixing a suspension arm of a suspension system.

7. Motor vehicle according to any one of Claims 1 to 6, **characterised in that** the lateral face (22) of the body of the spar (14) is a first lateral face, and **in that** the body further comprises a second lateral face, the lower face connecting the first lateral face and the second lateral face; and **in that** along the first section the first part extends against said second lateral face.

8. Motor vehicle according to any one of Claims 1 to 7, **characterised in that** the reinforcing component comprises a first component forming the first part, and a second component forming the second part of the reinforcing component, against the lower face (24) of the body at the level of the first section and welded to the first component along the first section.

9. Motor vehicle according to claim 8, wherein the first component comprises at least one lug for fixing by welding to the second component; the fixing lug extending perpendicularly to the lateral face of the body of the spar.

10. Motor vehicle according to any one of the previous claims 1 to 9, the vehicle further comprising a rear bumper beam, wherein the side member is a lower rear side member, and wherein the first section of the body is connected to the rear bumper beam.
